# EUROPEAN PATENT SPECIFICATION

(11) **EP 0 481 568 B1**
(45) Date of publication and mention of the grant of the patent: **20.04.1994**
(21) Application number: 91202683.8
(22) Date of filing: 15.10.1991
(51) Int. Cl.: B62D 5/04

(54) **Magnetic leakage flux torque sensing device**
Mit magnetischem Verlustflux arbeitende Drehmomentauswerteeinrichtung
Dispositif de détection de couple fonctionnant par perte de flux magnétique

(30) Priority: 15.10.1990 NL 9002238; 31.12.1990 NL 9002911
(43) Date of publication of application: 22.04.1992
(73) Proprietor: TEXAS INSTRUMENTS INCORPORATED, Dallas Texas 75265 (US); Texas Instruments Holland B.V., 7600 AA Almelo (NL)
(72) Inventor: Barink, Bernard, 7557 WZ Hengelo (NL); De Groot Ronald, 7681 HP Vroomshoop (NL); Van 't Veen, Daniel, 7623 HN Borne (NL); Kölling, Arie Jan, 7522 KC Enschede (NL)
(74) Representative: de Bruijn, Leendert C.

(56) References cited:
- WO-A-88/05742
- DE-A- 3 816 234
- GB-A- 2 211 943
- US-A- 4 783 626
- US-A- 4 876 899

## Description

The invention relates to a torque sensing device employing leakage flux for a manual steering wheel control with electrical torque excitation, provided with a housing, an input shaft, an output shaft, a torque transmission member between input and output shaft with two ferromagnetic elements mounted around the assembly of input shaft and output shaft, corresponding parts of which elements lie opposite each other in an engaging relation and in each case form discontinuities, and an associated lost-motion connection for coupling the output shaft directly to the input shaft after the latter has rotated through a certain angle, and a coil holder with at least one drive coil and a sensing coil for measuring the change in leakage flux at the discontinuity during a twisting of the torque transmission member, through an angle smaller than the certain angle, by the application of a torque. Such a torque sensing device is known from US Patent Specification 4,876,899.

Such a torque sensing device can advantageously be used with the conventional steering wheel systems for motor vehicles in order to detect the torque supplied to the steering wheel shaft. The device then provides a control signal corresponding to the torque in order to control an actuator for the purpose of applying a specific torque excitation to the steering wheel shaft. The torque sensing device known from the abovementioned American patent specification has a torque transmission member or torsion bar having ends which can relatively rotate to a slight degree on an initially supplied torque and which member has a lost-motion connection which after a predetermined angular rotation acts for the purpose of then transmitting directly any applied additional torque, while the torsion bar is also protected against damage. In this known torque sensing device a magnetic leakage flux design is used with a drive and sensing circuit for applying a magnetic field to the ferromagnetic elements via the drive coil and for detecting the change occurring in the magnetic leakage flux on twisting of the torsion bar at the discontinuity of these elements. The lost-motion connection is added to the torque transmission member and is generally provided with projecting parts or stops for engaging other corresponding parts or stops of said connection after a predetermined amount of rotation. A coil holder with at least one drive coil and a sensing coil is provided around the torque transmission member and the lost-motion connection. In the case of the drive and sensing circuit described in the abovementioned US patent specification a single primary coil is used to produce a drive field, while two differentially connected secondary coils are used to sense the change in magnetic leakage flux. A problem with the abovementioned torque sensing device is that the input and output shaft halves with the fitted ferromagnetic elements, projecting edges of which engage and grip the coil holder, have to be placed in said coil holder before the torsion shaft can be mounted. During this mounting, observation of the ferromagnetic elements is not possible, since the coil holder is situated around the ferromagnetic elements. In practice, this means that it is virtually impossible to align the ferromagnetic elements accurately. The torque sensing device has to be disassembled several times before a final alignment and fitting can be carried out.

The object of the invention is to eliminate this problem and also to provide such a design of the coil holder with accompanying coils around the shaft assembly that the torque can be sensed with great sensitivity.

This is achieved according to the invention in the case of a torque sensing device of the type mentioned in the preamble in that the coil holder is fixed inside the housing as a concentric unit therewith, the housing being supported by means of bearings on the input and output shaft, so that the coil holder can be positioned in an essentially non-contacting manner concentrically around the assembly of input and output shaft and an improved rotation symmetry is obtained.

In this embodiment according to the invention the rotationally symmetrical housing forms a concentric fixing location for the coils, as a result of which the latter are virtually perfectly axially aligned. As a result of the support of the housing by means of ball bearings, the coil holder is positioned perfectly concentrically around the centre of the shaft. Said coil holder consequently does not need to have any pressing connection to the shaft assembly and the ferromagnetic elements. This is an essentially non-contacting arrangement of the coil holder around the shaft assembly. Wear as a result of friction cannot occur here. The absence of - or considerably less - friction has a beneficial effect on hysteresis.

After fitting and accurate alignment of the two ferromagnetic elements or targets on the shaft assembly, the latter is placed in the housing. The coil holder can be already present therein, or the coil holder can also be fitted in the housing after placing of the shaft assembly. This can save a large amount of time during the fitting, and greater accuracy in the prior alignment and placing of the ferromagnetic elements on the shaft assembly can also be achieved. As a result of this sequence of fitting, the two targets can also be fitted in one piece and cut apart after fitting on the shaft. This is explained below.

The invention will be explained in greater detail with reference to an example of an embodiment shown in the drawings, in which the same parts are indicated by the same reference numbers, and in which:
Fig. 1 shows a longitudinal section of the torque sensing device according to the invention;
Fig. 2 shows a perspective view of the lost- motion connection;
Figs. 3a and 3b show so-called developed views of two embodiments of the ferromagnetic elements;
Fig. 4 shows a longitudinal section of a variant of the device of Fig. 1;
Fig. 5 shows a longitudinal section of another variant of the device of Fig. 1; and
Fig. 6 shows a diagram of an example of the drive and sensing circuit belonging to the torque device from Figs. 1, 4 and 5.

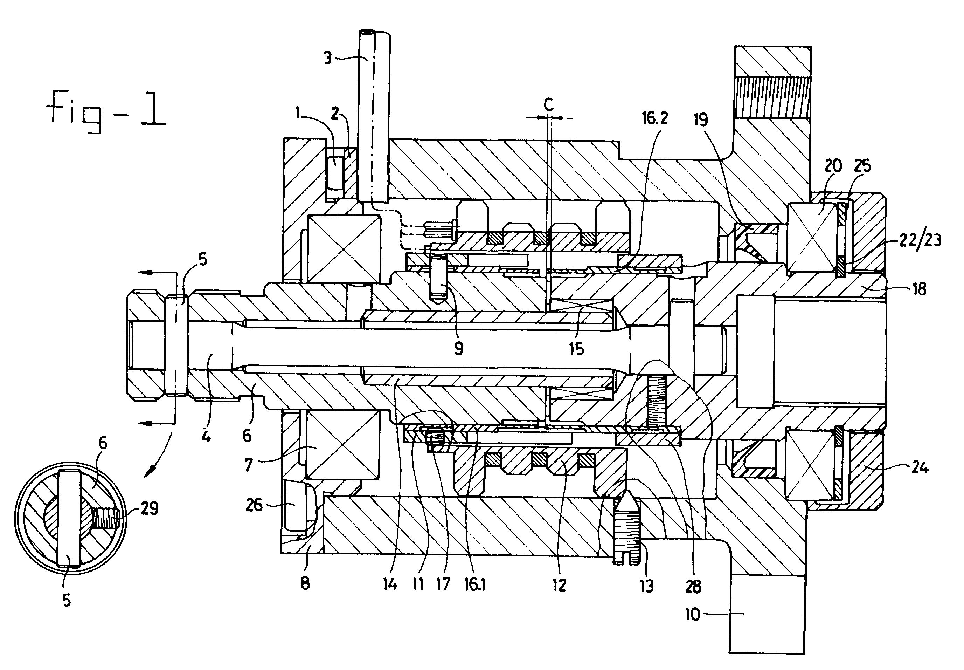

In the torque sensing device shown in Fig. 1 the input shaft is indicated by 6, the output shaft by 18, the housing by 10, the torque transmission member or torsion bar by 4, the coil holder with the drive and sensing coils by 12, and the two ferromagnetic elements or targets by 11, 28. In addition, a screw is indicated by 26, a protective cap by 8, a bearing by 7, a bush by 14, an adjusting screw by 17, two conducting bushes by 16.1 and 16.2, a davel pin by 9, an adjusting screw by 13, a needle bearing by 15, a sealing ring by 19, a bearing by 20, a spacer ring by 25, a retaining ring and filler ring by 22 and 23 respectively, a protective cap by 24, an electric cable by 3, a cable clip by 2, a screw by 1, a pin connection by 5, and an adjusting screw by 29 for securing, only during the fitting, the torque transmission member and lost-motion connection at the input and output shafts.

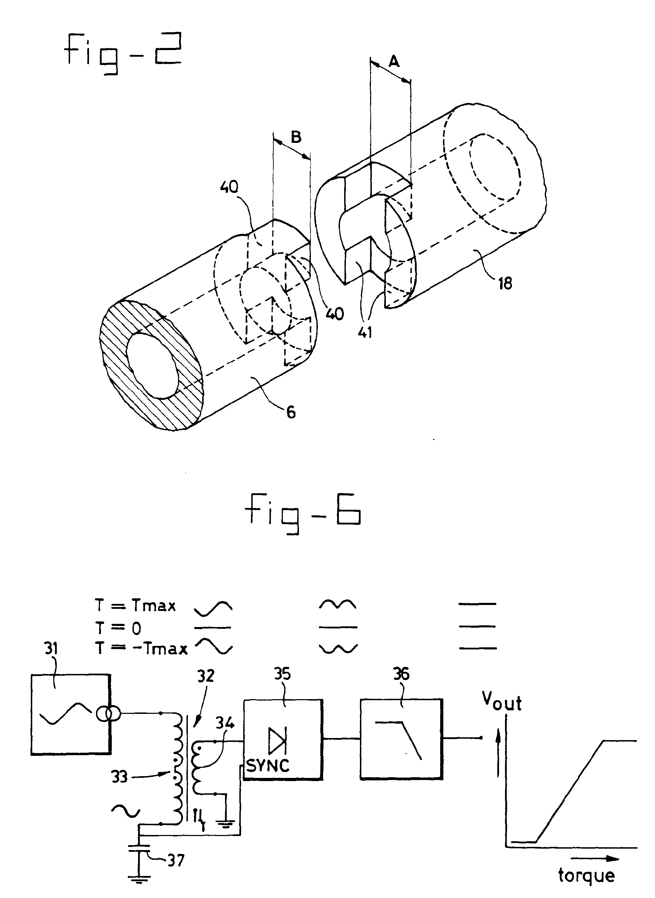

The distance C shown in Fig. 1, over which the ends of the input shaft 6 and the output shaft 18 lie opposite each other, is for example 0.3 to 0.5 mm. Fig. 2 shows the way in which said shaft ends form the lost-motion connection or coupling when, on fitting, they are brought into each other with play. The shafts 6 and 18 enclose the torsion bar 4 and the bush 14, not shown here. The dimensions A and B differ a little, so that the mechanical stops 40 engage with some play in the stops 41. This makes it possible for the input shaft to rotate from the centre position, for example to a maximum of approx. 3.5°, and in the process the torsion bar transmits the input torque up to a limit value before the output shaft is driven further via the mechanical stops and that part of the input torque which exceeds the abovementioned limit value is transmitted directly by said mechanical stops.

In the case of the embodiment according to the invention the coil holder 12 is fitted concentrically inside the rotationally symmetrical housing 10 and thus forms a unit with it before the shaft assembly with ferromagnetic elements starts to be fitted. The coil holder containing the coils is thereby virtually perfectly aligned axially. The ferromagnetic elements 11, 28 are first mounted on the shaft halves and accurately aligned.

An embodiment of the two ferromagnetic elements, which during the fitting can each be fixed individually around the shaft assembly and aligned relative to each other, is shown in Figure 3a. In another embodiment, as shown in Figure 3b, they can be fitted as one unit around the shaft assembly. After fixing, they are cut apart at the points (a) and (b). Alignment problems are avoided in this way. The complete shaft assembly is then placed in the housing in which the coil holder is already present. It is ensured in this way that no contact occurs between the coils and shaft assembly. This can then be described as a real non-contacting converter.

The two conducting bushes 16.1 and 16.2 fitted around the shaft assembly serve to screen the magnetic field so that the flux lines are forced to run through the ferromagnetic elements and the concentration of said flux lines in these elements becomes greater.

Due to the fact that the coil holder 12 is placed in the housing 10 and said housing is mounted on the shaft by means of the ball bearings 7, 20, the coil holder 12 is positioned in a virtually perfect concentric manner round the centre of the shaft. The result of this is that said coil holder will never bear in radial direction on the shaft and the magnetic elements.

Besides, in this design the housing acts as a closed electric winding round the coil holder. Since the housing is closed and rotationally symmetrical, no variation in the magnetic leakage flux can occur as a result of rotation of the shaft relative to the housing. This design is an advantage over the design with tinplated jacket in the abovementioned US patent specification, in which variation, through rotation of the shaft, does occur, and this design improves the dynamic behaviour of the embodiment according to the invention. The housing also acts as a shield against external magnetic and electric fields.

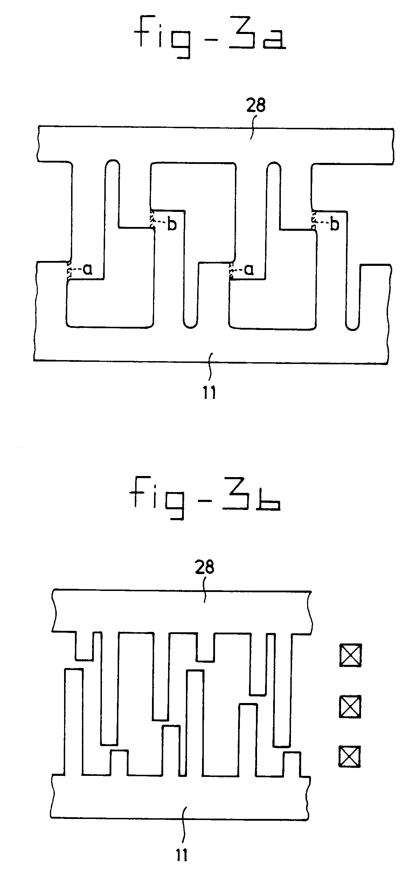

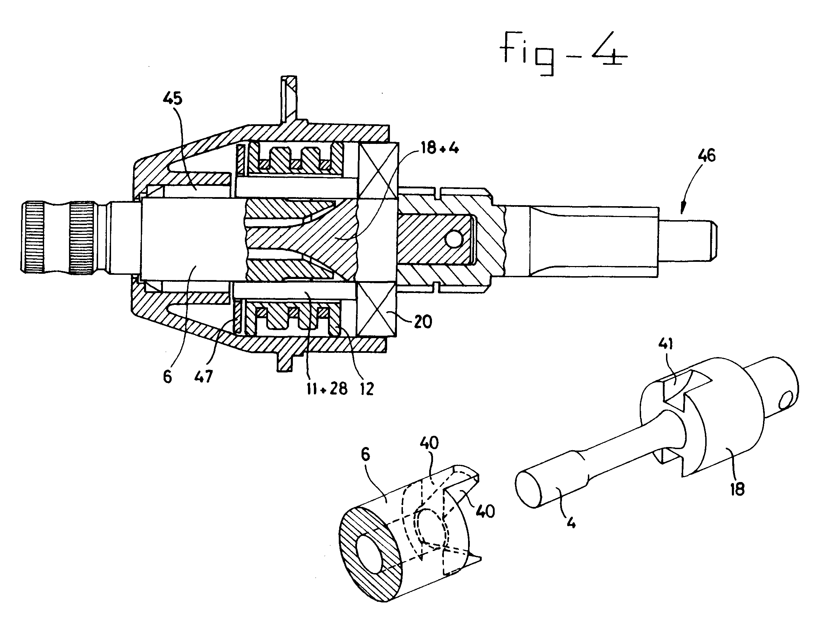

Fig. 4 shows a longitudinal section of a variant of the torque sensing device shown in Fig. 1. In this variant the output shaft 18 and the torsion bar 4 are now integral. As a result of this, the needle bearing 15 can be omitted. Advantages of this variant are that fewer parts are needed, that the difficult connection between output shaft and torsion bar is absent, and that play is no longer possible between said two parts.

In this variant, radial stresses on the input shaft are now absorbed by a needle bearing 45 which replaces the ball bearing 7 from Fig. 1. The radial stresses on the output shaft are absorbed by the ball bearing 20 and a pinion bearing (not shown) which is in general fixed at the position indicated by 46, and which supports the pinion 48 fixed on the output shaft 18. A further advantage with this variant is that the combined axial length of the ferromagnetic elements 11, 28 is shortened from 34 mm to 26 mm. This figure also indicates the way in which the printed circuit board 47 with the drive and sensing circuit is fixed on the end face of the coil holder 12. At the bottom in Fig. 4, there is an explanation of what is indicated in Fig. 2 concerning the way in which the ends of the input shaft 6 and the output shaft 18 form the lost-motion connection or torque when they are brought into each other with play.

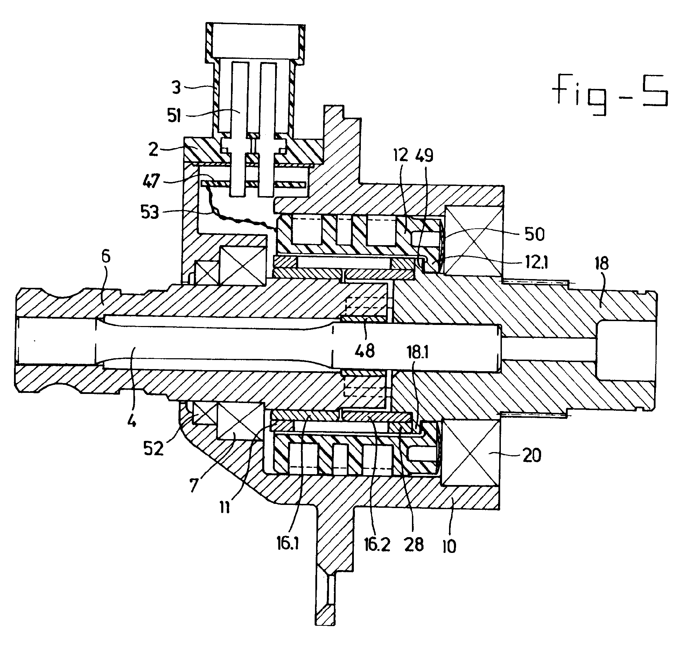

Figure 5 shows yet another variant of the device according to the invention shown in Figure 1. In Figure 5 the same parts are again indicated by the same reference numbers. There are a number of differences. The needle bearing 15 used in the device of Figure 1 is replaced here by a sliding bearing 48. In order to ensure a good seal, a sealing ring 52 is placed against the ball bearing 7. The printed circuit board 47 shown in the device of Figure 4 is placed in a different way in the device of Fig. 5, resting directly against the connector 2. Connector pins 51 from the connector 2 end on the printed circuit board and the wiring running from the printed circuit board to the coil holder 12 is indicated by 53. A major change is the design of the coil holder 12, which at the side of the output shaft 18 or at another location is provided with a radially inward projecting flange 12.1 which engages, with the interposition of a sliding ring 49, on an upright collar 18.1 of the output shaft 18. At the right end face of the coil holder 12 a sine spring 50 is placed between said holder and the large bearing 20.

A major advantage of this variant is explained below. The housing of the device is generally made of aluminium while other elements such as the shafts, the targets and the coil holder are made of steel. These elements have different coefficients of expansion. Since the coil holder is fixed to the housing, said coil holder will be able to slide in the lengthwise direction relative to the targets on the shaft assembly when there is a temperature change. A detection signal which is dependent on temperature is thereby obtained. In the case of the variant of Fig. 5 this is avoided. The coil holder is accommodated by one or more longitudinal ribs in a sliding manner in corresponding grooves in the housing. The coil holder 12 with its flange 12.1 is pressed against the upright edge 18.1 of the output shaft 18 by means of the sine washer 50. In the event of any temperature change, the coil holder will be able to expand in the axial direction to the same degree as the shaft assembly, and the coils will retain exactly the same position relative to the targets. The expansion coefficient of the material of the coil holder in similar to that of the steel shafts.

The abovementioned embodiment also permits an extremely simple fitting of the various parts, which is explained below.

### a. Assembly of input shaft and output shaft.

The sliding bearing 48 is placed in the input shaft. At the same time the torsion bar 4 is pressed through force fitting into the input shaft and output shaft. This takes place in such a way that both shafts are mounted fixedly so that the mechanical stops at their shaft ends engage centred with play in each other, following which the torsion bar is pressed in. This design means that in principle no pin connection is now necessary for fixing the torsion bar. Such a pin connection can possibly be applied for the purpose of a fail-safe connection.

### b. Assembly of bushes and ferromagnetic elements.

The ferromagnetic element 28 is glued onto the bush 16.2, and the ferromagnetic element 11 is glued onto the bush 16.1, and possibly be reinforced with the aid of a pin connection (fail-safe).

### c. Shaft assembly.

The combination ferromagnetic elements/bushes is positioned and glued onto the input shaft/output shaft assembly. The small ball bearing 7 is then fixed on the input shaft.

### d. Assembly in the housing.

The sealing ring 52 is placed in the housing 10, and the shaft assembly is placed in the housing 10. The sliding ring 49 is then placed on the output shaft 18, and the coil holder 12 is placed in the housing 10. The sine spring 50 is placed against the coil holder 12, and the large ball bearing 20 is placed in the housing, so that shaft assembly, coil holder and cupped spring washer are confined in the inside of the device.

### e. Connector assembly.

The connector 2 is integral with the connector pins 51. The printed circuit board 47 covered with components is soldered to the connector pins 51. The printed circuit board is connected by means of the wiring 53 to the coils present in the coil holder 12.

### f. Final assembly.

The connector 2 is fixed on the housing 10. The sensor device is then calibrated for offset and gain.

Fig. 6 shows the electrical diagram of the drive and sensing circuit advantageously used in the device according to the invention. In it, a signal generator is indicated by 31, for generating the drive voltage, the coil assembly is indicated by 32, a synchronous detector by 35, an averager by 36, and a capacitor by 37. It is generally known from the state of the art to connect an oscillator to a primary drive coil and to use two differentially connected pick-up or sensing coils. In the case of such a design the parasitic capacitance of the coils always present is a determining factor for the maximum drive or excitation frequency of the primary coil. The optimisation of such coils in order to obtain a minimum parasitic capacitance is expensive, since the windings must not touch each other. A spacer must then be present between the winding layers. Besides, the parasitic capacitance of the two secondary coils will never be identical, and such a difference results in a phase difference between the signals of the two secondary coils, resulting in distortion of the differential signal. The synchronous read-out detector connected to such a coil assembly is susceptible to the fault source described above.

In order still to be able to manage with cheap coils, another drive method can be used. In this case, a primary coil 33 is controlled which is composed of two oppositely wound primary coil halves connected in series, so that the current passes through both coil halves. As a result of this design, little or no phase difference remains between the magnetic fields created in the two secondary coil halves, as the main fields are opposed. Only a small ripple remains. The single secondary coil 34 therefore measures a field which is influenced little by parasitic capacitance in the coils being driven. The synchronisation signal required for the synchronous detector 35 is obtained by taking off the voltage over a capacitor 37 connected in series to the primary coil, and in which the control current runs. The voltage over this capacitor is phase-shifted 90° relative to the flux in the primary coil. In the case of an unloaded primary coil, no phase shift occurs between synchronisation signal and measurement signal. However, in practice a slight phase shift will occur as a result of the parasitic capacitance and the ohmic resistance of the primary coil. This phase shift has, however, a much lower effect than the phase difference between the signals of the two secondary coils in the case of conventional drive.

The fact that there is in principle no phase difference between the generated flux of one primary coil half and that of the other means that it is possible to work at a higher control frequency. This results in a shorter response time of the entire sensing device. In the case of the state of the art a drive frequency of up to 6 kHz is applied, while in the design according to the invention a drive frequency of up to a multiple thereof can be applied.

In Fig. 6 on the right a graph is also shown of the output voltage in mV of the drive and sensing circuit as a function of the input torque in Kg.m. The breakpoints indicate where the lost-motion connection acts in one direction and in the other direction.

The abovementioned torque sensing device can, as stated above, be used in particular for car steering systems. In small cars, for example, it is desirable to have assistance with parking. The total excitation system then comprises the abovementioned torque sensing device, a processing unit and an electric motor. At low speeds the electric motor is then controlled by the signal from the torque sensing device, and said electric motor gives an additional excitation to the steering system. Instead of the electric motor as the actuator, a pump driven by the internal combustion engine or by an electric motor can be used. Except at low speeds, the system can also be used in a continuously operating manner in order to obtain a vehicle speed-dependent regulation. Higher standards are then required with regard to safety.

## Claims

1. Torque sensing device working with leakage flux for a manual steering wheel control with electrical torque excitation, provided with a housing (10), an input shaft (6), an output shaft (18), a torque transmission member (4) between input (6) and output shaft (18) with two ferromagnetic elements (11,28) mounted around the assembly of input shaft (6) and output shaft (18), corresponding parts of which elements lie opposite each other in an engaging relation and in each case form discontinuities, and an associated lost-motion connection for coupling the output shaft (18) directly to the input shaft (6) after the latter has rotated through a certain angle, and a coil holder (12) with at least one drive coil (33) and a sensing coil (34) for measuring the change in leakage flux at the discontinuity during a twisting of the torque transmission member (4), through an angle smaller than the certain angle, by the application of a torque, characterised in that the coil holder (12) is fixed inside the housing (10) as a concentric unit therewith, the housing (10) being supported by means of bearings (7,20) on the input (6) and output shaft (18), so that the coil holder (12) can be positioned in an essentially non-contacting manner concentrically around the assembly of input (6) and output shaft (18) and an improved rotation symmetry is obtained.

2. Method for fitting the torque sensing device according to Claim 1, characterised in that the ferromagnetic elements (11,28) of the torque transmission member (4) are first aligned and fixed around the assembly of input (6) and output shaft (18), and in that the shaft assembly provided with said elements is then placed inside the housing (10) with coil holder (12).

3. Method for fitting the torque sensing device according to Claim 1, characterised in that the ferromagnetic elements (11,28) of the torque transmission member (4), designed in one piece, with parts connected to each other at the discontinuities, are first fixed around the assembly of input shaft (6) and output shaft (18), after which the ferromagnetic elements (11,28) are cut apart at the discontinuities, and in that the complete shaft assembly is then placed inside the housing (10) with coil holder (12).

4. Torque sensing device according to Claim 1, characterised in that the output shaft (18) and the torque transmission member (4) are integral.

5. Torque sensing device according to Claim 1, characterised in that the coil holder (12) is provided with a radially inward projecting edge (12.1) which rests with sliding play under spring pressure against a raised edge (18.1) of the output shaft (18).

6. Method for fitting the torque sensing device according to Claim 5, characterised in that the ferromagnetic elements (11,28) are first aligned and fixed around the assembly of input (6) and output shaft (18), in that the shaft assembly provided with said elements is placed inside the housing (10), and in that the coil holder (12) is then placed in the housing (10) around the shaft assembly with the elements.

7. Torque sensing device according to Claim 1, provided with a drive and sensing circuit, characterised in that in the coil holder (12) at the primary side, the coil (33) comprising two series-connected, oppositely wound coil halves is controlled, and in that at the secondary side a single sensing coil (34) is used.

## Patentansprüche

1. Mit Streufluß arbeitende Drehmomentsensorvorrichtung für eine manuelle Lenkradsteuerung mit elektrischer Drehmomenterregung, versehen mit einem Gehäuse (10), einer Eingangswelle (6), einer Ausgangswelle (18), einem Drehmomentübertragungselement (4), das zwischen der Eingangswelle (6) und der Ausgangswelle (18) angeordnet ist und zwei ferromagnetische Elemente (11, 28) enthält, die um die Baugruppe aus Eingangswelle (6) und Ausgangswelle (18) herum angeordnet sind, wobei korrespondierende Teile der Elemente einander in einem Eingriffsverhältnis gegenüberliegen und in jedem Fall Diskontinuitäten bilden, einem zugeordneten Totgang-Verbindungselement, um die Ausgangswelle (18) direkt mit der Eingangswelle (6) zu verbinden, nachdem letztere sich um einen bestimmten Winkel gedreht hat, und einem Wicklungshalter (12) mit wenigstens einer Antriebswicklung (33) und einer Sensorwicklung (34), um die Veränderung des Streuflusses an der Diskontinuität während eines Verwinden des Drehmomentübertragungselementes (4) durch ein aufgebrachtes Drehmoment um einen Winkel, der kleiner als der bestimmte Winkel ist, zu messen, dadurch gekennzeichnet, daß der Wicklungshalter (12) innerhalb des Gehäuses (10) als zum Gehäuse konzentrische Einheit befestigt ist, wobei das Gehäuse (10) mittels Lagern (7, 20) auf der Eingangswelle (6) und der Ausgangswelle (18) so getragen ist, daß der Wicklungshalter (12) in einer im wesentlichen berührungsfreien Weise konzentrisch um die Baugruppe aus Eingangswelle (6) und Ausgangswelle (18) herum positioniert werden kann und eine verbesserte Rotationssymmetrie erhalten wird.

2. Verfahren zum Zusammenbauen der Drehmomentsensorvorrichtung nach Anspruch 1, dadurch gekennzeichnet, daß die ferromagnetischen Elemente (11, 28) des Drehmomentübertragungselementes (4) erst ausgerichtet und um die Baugruppe aus Eingangswelle (6) und Ausgangswelle (18) herum befestigt werden und daß die mit den Elementen versehene Wellenbaugruppe dann innerhalb des Gehäuses (10) mit dem Wicklungshalter (12) angeordnet wird.

3. Verfahren zum Zusammenbauen der Drehmomentsensorvorrichtung nach Anspruch 1, dadurch gekennzeichnet, daß die ferromagnetischen Elemente (11, 28) des Drehmomentübertragungselementes (4), die einstückig ausgeführt sind, mit an den Diskontinuitäten untereinander verbundenen Abschnitten, zuerst um die Baugruppe aus Eingangswelle (6) und Ausgangswelle (18) herum befestigt werden, bevor die ferromagnetischen Elemente (11, 28) an den Diskontinuitäten auseinandergeschnitten werden, und daß die komplette Wellenbaugruppe dann innerhalb des Gehäuses (10) mit dem Wicklungshalter (12) plaziert wird.

4. Drehmomentsensorvorrichtung nach Anspruch 1, dadurch gekennzeichnet, daß die Ausgangswelle (18) und das Drehmomentübertragungselement (4) einstückig ausgeführt sind.

5. Drehmomentsensorvorrichtung nach Anspruch 1, dadurch gekennzeichnet, daß der Wicklungshalter (12) mit einem radial nach innen hervorstehenden Rand (12.1) versehen ist, der ein Gleitspiel aufweist und sich federbeaufschlagt an einem erhobenen Rand (18.1) der Ausgangswelle (18) in Anlage befindet.

6. Verfahren zum Zusammenbauen der Drehmomentsensorvorrichtung nach Anspruch 5, dadurch gekennzeichnet, daß die ferromagnetischen Elemente (11, 28) zuerst ausgerichtet und um die Baugruppe aus Eingangswelle (6) und Ausgangswelle (18) herum befestigt werden, daß die mit den Elementen versehene Wellenbaugruppe innerhalb des Gehäuses (10) plaziert wird und daß der Wicklungshalter (12) dann im Gehäuse (10) um die Wellenbaugruppe mit den Elementen herum plaziert wird.

7. Drehmomentsensorvorrichtung nach Anspruch 1, versehen mit einem Antriebs- und einem Sensorkreis, dadurch gekennzeichnet, daß im Wicklungshalter (12) auf der Primärseite die zwei in Reihe geschaltete, entgegengesetzt gewickelte Wicklungshälften enthaltende Wicklung (33) gesteuert wird und daß auf der Sekundärseite eine einzige Sensorwicklung (34) verwendet wird.

## Revendications

1. Dispositif de détection de couple fonctionnant avec un flux de fuite pour une commande de volant de direction manuel avec l'excitation d'un couple électrique, comportant un boîtier (10), un arbre d'entrée (6), un arbre de sortie (18), un élément (4) de transmission de couple entre l'arbre d'entrée (6) et l'arbre de sortie (18) avec deux éléments ferromagnétiques (11, 28) montés autour de l'assemblage de l'arbre d'entrée (6) et de l'arbre de sortie (18), des parties correspondantes dont les éléments sont opposés les uns aux autres en relation de coopération et dans chaque cas forment des discontinuités, et une connexion associée de mouvement perdu pour coupler l'arbre de sortie (18) directement à l'arbre d'entrée (6) après que ce dernier a tourné d'un certain angle, et un support (12) de bobinage avec au moins un bobinage de commande (33) et un bobinage de détection (34) pour mesurer la variation du flux de fuite à la discontinuité au cours d'une torsion de l'élément (4) de transmission de couple, d'un angle inférieur au certain angle, par l'application d'un couple, caractérisé en ce que le support (12) de bobinage est fixé à l'intérieur du boîtier (10) comme une unité concentrique à celui-ci, le boîtier (10) étant supporté au moyen de paliers (7, 20) sur l'arbre d'entrée (6) et l'arbre de sortie (18), de telle sorte que le support (12) de bobinage peut être positionné d'une manière essentiellement sans contact concentriquement autour de l'assemblage de l'arbre d'entrée (6) et de l'arbre de sortie (18) et une symétrie de rotation améliorée est obtenue.

2. Procédé pour le montage du dispositif de détection de couple selon la revendication 1, caractérisé en ce que les éléments ferromagnétiques (11, 28) de l'élément (4) de transmission de couple sont tout d'abord alignés et fixés autour de l'assemblage de l'arbre d'entrée (6) et de l'arbre de sortie (18), et en ce que l'assemblage des arbres comportant ces éléments est alors placé à l'intérieur du boîtier (10) avec le support (12) de bobinage.

3. Procédé pour le montage du dispositif de détection de couple selon la revendication 1, caractérisé en ce que les éléments ferromagnétiques (11, 28) de l'élément (4) de transmission de couple, formés en une seule pièce, avec des parties connectées les unes avec les autres aux discontinuités, sont tout d'abord fixés autour de l'assemblage de l'arbre d'entrée (6) et de l'arbre de sortie (18), après quoi les éléments ferromagnétiques (11, 28) sont séparés aux discontinuités, et en ce que l'assemblage complet des arbres est alors placé à l'intérieur du boîtier (10) avec le support (12) de bobinage.

4. Dispositif de détection de couple selon la revendication 1, caractérisé en ce que l'arbre de sortie (18) et l'élément (4) de transmission de couple forment un seul bloc.

5. Dispositif de détection de couple selon la revendication 1, caractérisé en ce que le support (12) de bobinage comporte un bord (12.1) faisant saillie radialement vers l'intérieur qui repose avec un jeu glissant sous la pression à ressort contre un bord (18.1) surélevé de l'arbre de sortie (18).

6. Procédé de montage du dispositif de détection de couple selon la revendication 5, caractérisé en ce que les éléments ferromagnétiques (11, 28) sont tout d'abord alignés et fixés autour de l'assemblage de l'arbre d'entrée (6) et de l'arbre de sortie (18), en ce que l'assemblage des arbres comportant lesdits éléments est placé à l'intérieur du boîtier (10), et en ce que le support (12) de bobinage est alors placé dans le boîtier (10) autour de l'assemblage des arbres avec les éléments.

7. Dispositif de détection de couple selon la revendication 1, comportant un circuit de commande et de détection, caractérisé en ce que dans le support (12) de bobinage du côté primaire, le bobinage (33) comportant deux moitiés de bobinage connectées en série bobinées de manière opposée est commandé, et en ce que du côté secondaire un seul bobinage de détection (34) est utilisé.
